Europäisches Patentamt

(19) European Patent Office

Office européen des brevets

(11) Publication number: **0 192 417**
**A2**

(12) # EUROPEAN PATENT APPLICATION

(21) Application number: **86300981.7**

(22) Date of filing: **13.02.86**

(51) Int. Cl.⁴: **B 65 D 81/20**

(30) Priority: **19.02.85 GB 8504239**

(43) Date of publication of application:
**27.08.86 Bulletin 86/35**

(84) Designated Contracting States:
**AT BE CH DE FR IT LI LU NL SE**

(71) Applicant: **W.F.J. Refractories Limited**
**Chester Road Pentre Queensferry**
**Deeside Clwyd, CH5 2DT(GB)**

(72) Inventor: **Carson, John Edward**
**11 Bryneithin Avenue Prestatyn**
**Clwyd, LL19 9LS(GB)**

(74) Representative: **Lyons, Andrew John et al,**
**ROYSTONS 531 Tower Building Water Street**
**Liverpool L3 1BA(GB)**

(54) **Fibrous material packages, method of making same and their use.**

(57) A mat 10 of fibrous material has been wrapped under vacuum in a bag 12 made of a laminate of a layer 14 nylon and a layer 16 of polyethylene. The bag 12 has been sealed by heat welding the facing layers of polyethylene at 18.

FIG.1

Title:   Fibrous material packages, method of making
same and their use


## DESCRIPTION


This invention concerns the fibrous material packages, such as of ceramic and mineral fibres method of making same and their use.

Ceramic and mineral fibrous materials are used, for example, in catalytic converters for motor vehicles. Such catalytic converters are for the treatment of exhaust gases to render them substantially harmless before emission to atmosphere.  Treatment is by passing the exhaust gases through a chamber enclosing a porous ceramic block whose pores are coated with a suitable catalyst.

The fibrous material surrounds the ceramic block in order to insulate it from the colder temperatures outside the converter, to provide sound proofing and to cushion the ceramic block against expansion and contraction of the chamber.

A commonly used fibrous material is that sold under the trade name SAFFIL which is 95% alumina and provided as a low density mat.  In the manufacture of some catalytic converters for motor vehicles a sheet of the fibrous material is laid on one half of the chamber the ceramic block placed in that half of the chamber, the sheet, folded over the block and the other half of the chamber placed on top. The ends of the fibrous material sheet are supposed to meet when folded over the ceramic block. However, as the material is being compressed and folded over more or less at the same time, the ends of the sheet do not always meet. This leaves an area of the ceramic block not afforded the above mentioned protection.

Furthermore due to the fibrous nature of the material, a certain amount of disintegration of the sheet occurs during the manufacture of catalytic converters.

A certain amount of compression is, however desirable so that there is a reasonably secure fit for the ceramic block in the chamber, i.e. so that it will not shake about.

An object of this invention is to provide a way of installing fibrous material so that the above mentioned problems are overcome or at least reduced in effect.

According to this invention a package of fibrous material comprises fibrous material, such as in the

- 3 -                    0192417

form of a mat or sheet, wrapped under vacuum or at least reduced pressure and sealed in a substantially air impervious material.

The invention also provides a method of making a package of fibrous material, such as in the form of a mat or sheet, comprising wrapping and sealing the fibrous material under vacuum or at least reduced pressure in substantially air impervious material.

Preferably the air impervious material is plastics sheet material ideally preformed as an envelope or pouch into which a fibrous material mat can be fitted before application of reduced pressure or vacuum followed by heat sealing. The application of reduced pressure or vacuum compresses the fibrous material to give a thinner layer of material which aids installation. Also, the resultant package is much easier to handle with no mess from fibres breaking away.

The use of plastics material for wrapping the fibrous material is particularly advantageous for the manufacture of catalytic converters for exhaust gases of motor vehicles. Almost certainly when first used, the converter will become extremely hot so that the plastics material degrades or burns and this releases the fibrous material so that it expands to hold the converter block securely.

In addition, there will be less chance of a gap between the ends of the fibrous material sheet as the fitting of the converter block cannot compress the fibre material any more than it has already been compressed in the wrapping process.

A suitable plastics material for wrapping the fibrous material is believed to be a laminate of nylon and polyethylene. The laminate would be used with the nylon layer outermost which is substantially impervious and the polyethylene layer innermost so that facing areas of the laminate can be heat welded together.

A slight disadvantage with the laminate of nylon and polyethylene is that it is usually thick and so is not always completely burnt off in the catalytic converter due to a lack of oxygen in exhaust fumes passing through the converter. The laminate, therefore, sometimes merely degrades. This contaminates the fibrous material, making it less effective.

To overcome this disadvantage it is further proposed firstly to wrap the fibrous material under vacuum or at least under reduced pressure in thin pervious material, preferably plastics material, for example polyethylene say 15-20 $\mu$ thick, and then to wrap that under vacuum or at least reduced pressure in substantially air impervious material, such as the previously mentioned laminate of nylon and polyethylene. The second wrapping is preferably done as quickly as possible after the first wrapping, otherwise the first wrapping will reflate.   To install the double wrapped fibrous material in say a catalytic converter, the outer wrapping is removed shortly prior to installation and as the fibrous material will remain compressed for a few minutes, there should be sufficient time for the fibrous material to be installed before it returns to its prewrapped size.   Advantageously, initial expansion of the fibrous material due to the pervious nature of the inner wrapping makes the fibrous material flexible facilitating installation.

Another advantage from the present invention is that wrapped fibrous material sheets can be packed more easily for transportation.   Also, more sheets can be packed in a box than before, so that less space will be occupied by a consignment of the sheets, thus reducing the costs of transportation.

The fibrous material will usually be wrapped flat, although it is possible to wrap the fibrous material on a former so that it is preformed to the shape that it would take up when installed. The latter would, however, increase transport costs as more space would be taken up by the preformed shapes.

For catalytic converters of exhaust systems wherein two half shells contain a catalytic converter block, it is preferred to provide two prewrapped sheets of fibrous material.

One sheet is placed in one half shell, the converter block laid on that, the second sheet laid on that and finally the other half shell laid on top. The two shells are then brought together in a hydraulic jig and welded at their edges.

The invention has been described mainly with reference to catalytic converters for exhaust gases of motor vehicles. However, it should be appreciated that fibrous material sheets can have other uses and that wrapping thereof in accordance with the invention may be desirable and useful.

This invention will now be further described, by way of example only, with reference to the accompanying drawings, in which:-

Figure 1 is a section through a first embodiment of the invention;

Figure 2 is a section through a second embodiment of the invention;    and

Figure 3 is a section through a catalytic converter of a motor vehicle exhaust system.

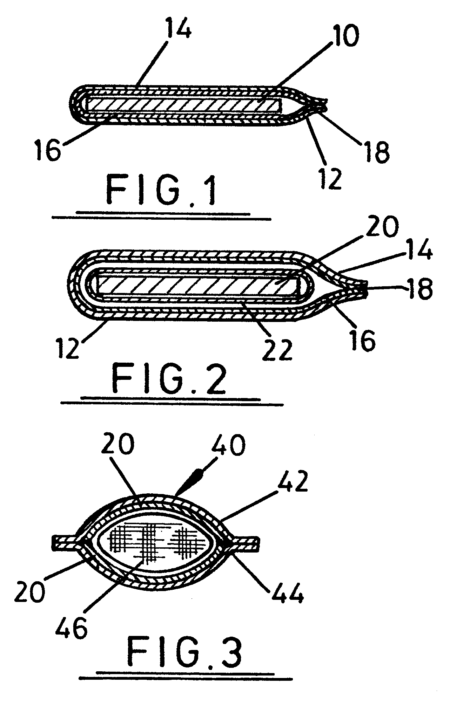

Referring to Figure 1 a mat 10 of fibrous material, such as that sold under the trade name SAFFIL has been wrapped under vacuum in a bag 12 made of a laminate of a layer 14 nylon and a layer 16 of polyethylene. The bag 12 has been sealed by heat welding the facing layers of polyethylene at 18.

Turning to Figure 2, a mat 20 of fibrous material, such as of SAFFIL, has been wrapped in a bag 22 of polyethylene under vacuum and sealed.   This bag is then vacuum wrapped in a similar bag to that shown in Figure 1 and referenced similarly in Figure 2.

Finally in Figure 3, a catalytic converter 40 of a motor vehicle exhaust system comprises flanged steel half shells 42 and 44 welded together at their flanges and contains a ceramic porous catalytic converter block 46 cushioned above and below by mats 20 of fibrous material.   The polyethylene wrapping 22 may be destroyed during the welding process but will certainly

- 8 -

0192417

be destroyed as soon as hot exhaust gases through the
converter.

## CLAIMS

1. A package of fibrous material comprising fibrous material wrapped under vacuum or at least reduced pressure and sealed in a substantially air impervious material.

2. A package as claimed in claim 1, wherein the air impervious material is plastics sheet material.

3. A package as claimed in claim 2, wherein the plastics sheet is preformed as an envelope or pouch into which the fibrous material is fitted before application of reduced pressure or vacuum followed by heat sealing.

4. A package as claimed in claim 1, 2 or 3, wherein the fibrous material is of ceramic or mineral fibres.

5. A package as claimed in any one of claims 1 to 4, wherein the fibrous material is in the form of a mat or sheet.

6. A package as claimed in any one of claims 1 to 5, wherein the plastics material is a laminate of polyethylene and nylon.

7. A package as claimed in any one of claims 1 to 6, wherein the fibrous material is firstly sealed under vacuum or at least reduced pressure in air pervious material.

8.    A package as claimed in claim 8, wherein the pervious material is polyethylene.

9.    A method of making a package of fibrous material comprising wrapping and sealing the fibrous material under vacuum or at least reduced pressure in substantially air impervious material.

10.    A method as claimed in claim 9 comprising the step of firstly sealing the fibrous material under vacuum or at least reduced pressure in air pervious material.

FIG.1

FIG.2

FIG.3